# EUROPÄISCHE PATENTANMELDUNG

(11) **EP 1 065 692 A2**
(43) Veröffentlichungstag der Anmeldung: **03.01.2001**
(21) Anmeldenummer: 00112734.9
(22) Anmeldetag: 16.06.2000
(51) Int. Cl.: H01J 1/30

(54) **Flächige Elektronen-Feldemissionsquelle und Verfahren zu deren Herstellung**

(30) Priorität: 01.07.1999 DE 19931328
(71) Anmelder: Codixx AG, 39112 Magdeburg (DE)
(72) Erfinder:
(74) Vertreter: Patentanwälte Hauck, Graalfs, Wehnert, Döring, Siemons

(57) **Zusammenfassung**

Flächige Elektronen-Feldemissionsquelle, insbesondere für den Einsatz in flachen Bildschirmen, wobei selbige eine aktive Schicht reduzierter Dichte aufweist, deren Basismaterial ein hochschmelzendes Metall mit einem Schmelzpunkt oberhalb 1800 K ist und deren Dichte im Vergleich zum kristallinen Volumenmaterial des hochschmelzenden Metalls um mindestens 20 % reduziert ist, oder selbige eine aktive Schicht reduzierter Dichte aufweist, deren Basismaterial ein Gemisch verschiedener Metalle ist, von denen mindestens eines ein hochschmelzendes Metall mit einem Schmelzpunkt oberhalb 1800 K ist, und die Dichte der aktiven Schicht im Vergleich zum kompakten Gemisch der kristallinen Volumenmaterialien gleicher Zusammensetzung wie das Basismaterial um mindestens 20 % reduziert ist.

## Beschreibung

### Angabe des technischen Gebietes

Die vorliegende Erfindung bezieht sich auf einen neuen Typ einer flächigen Elektronen-Feldemissionsquelle und beschreibt ein Verfahren zu deren Herstellung. Derartige Elektronen-Feldemissionsquellen finden beispielsweise Anwendung in Flachbildschirmen für Anzeigetafeln, Computer und Fernsehbildgeräte. Hier besteht der ausdrückliche Bedarf nach der Herstellung von Elektronen-Feldemissionsquellen auf großen Flächen bis in die Dimension von Metern. Weitere Einsatzgebiete für diese Emitter sind die Verwendung als kalte Kathoden in Bauelementen der Vakuumelektronik und Vakuummikroelektronik.

### Stand der Technik

Feldemission (auch als Feldelektronenemission oder Kaltemission bezeichnet) ist der Austritt von Elektronen aus kalten Metallen bei Einwirkung eines äußeren elektrischen Feldes von genügend hoher Feldstärke (typischerweise mehr als 10⁷ V/cm). Praktisch erfolgt Feldemission an Kanten und Spitzen, da vor diesen bereits bei relativ niedrigen elektrischen Spannungen beträchtliche Feldstärken erreicht werden, die den Austritt von Elektronen mittels Tunneleffekt ermöglichen. Die Nutzung der Feldemission in elektronischen Bauelementen und insbesondere Feldemitterdisplays setzt die Existenz eines Hochvakuums voraus.

Herkömmliche Elektronen-Feldemissionsquellen basieren auf der Herstellung von metallischen Mikrospitzen (s. hierzu beispielsweise "Surface Science Aspects of Vacuum Microelectronics" by P. R. Schwoebeland and L. Brodie in J. Vac. Sci. Technol. B, Bd. 13 (1995) S. 1391) durch aufwendige Ätzprozesse. In Verbindung mit integrierten Steuerelektroden haben sogenannte Feldemitterarrays mit Mikrospitzen Ende der 70er Jahre das Wirkprinzip Feldemission für die industrielle Anwendung interessant gemacht. Mit der Ausnutzung mikroelektronischer Herstellungsverfahren lag es nahe, die Emitterspitzen auch aus Halbleitermaterialien, insbesondere Silizium, herzustellen.

Die DE 196 02 595 A1 schlägt eine andere Strukturierung zur Herstellung flächenhafter Feldemissionsquellen vor. In einer isolierenden Schicht werden Löcher mit einem Durchmesser bis zu einigen 10 nm erzeugt, die nach dem Auffüllen mit einem Metall als Feldemissionspitzen dienen.

Die WO 9745854 A1 (Prioritätspatent: US 5 726 524) beschreibt eine Elektronen-Feldemissionsquelle, die sich aus einer Vielzahl diskreter Mikrostrukturen zusammensetzt, deren Flächendichte einen Wert von mindestens 10⁷/cm² überschreitet. Die Durchmesser dieser diskreten Mikrostrukturen betragen 0,01 bis 0,5 µm, ihre Länge beträgt 0,1 bis 5 µm. Die Mikrostrukturen werden durch Dampfabscheidung eines organischen Farbstoffes und nachfolgende thermische Behandlung hergestellt. Die Ansprüche des Patents erstrecken sich neben Mikrostrukturen organischen Ursprungs auch auf solche aus einem halbleitenden Material. Sie können eine Oberschicht aus verschiedenen Materialien besitzen, die auch eine niedrige Austrittsarbeit besitzen. Hierfür werden auch Metalle angeführt. Aus dem Kontext ist aber ersichtlich, daß dies Metallschichten im konventionellen Sinn sind. Die für die Feldemission primäre Struktur wird nicht durch das Metall gebildet, sondern durch die genannten diskreten Strukturen, die bevorzugt aus einem organischen Material bestehen.

Ein anderer Weg ist die Herstellung von Elektronen-Feldemissionsquellen auf der Basis von dünnen Schichten. Die meisten Publikationen und Patentschriften hierzu betreffen Beschichtungen aus Diamant. Dabei wird einerseits die negative Elektronenaffinität des Diamants ausgenutzt. Eine wesentliche Rolle spielen andererseits auch die scharfen Kanten der Diamant-Mikrokristalle, die zu hohen Feldstärken führen. Solche Erfindungen werden beispielsweise in der EP 0 709 869 A1 und der DE 197 27 606 A1 beschrieben. Die Stromdichte dieser Schichten soll mindestens 0,1 mA/mm² bei einer Feldstärke von 25 V/µm betragen (DE 197 27 606 A1).

Der sogenannte diamantartige Kohlenstoff (DLC), ist eine amorphe Schicht aus einer Kohlenstoff-Wasserstoff Legierung (diese wird teilweise auch als a-C:H bezeichnet), die auch bei geringen Temperaturen von typischerweise 500 K hergestellt wird. Ähnlich dem Diamant beruht der Einsatz dieser Schichten in Elektronen-Feldemissionsquellen auf der negativen Elektronenaffinität des Materials. Die Herstellung von DLC-Schichten und ihr Eigenschaften als Feldemitter wird beispielsweise in dem Artikel 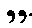 Advanced PECVD process for highly electron emitting diamond-like-carbon" by J. Jang, J. H. Moon, E. J. Han, S. J. Chung, Thin Solid Films Bd. 341 (1999) S. 196 beschrieben.

Eine andere Realisierungsmöglichkeit für eine Elektronen-Feldemissionsquelle mittels einer dünnen Schicht auf der Basis von Silicium wird in der Publikation ("Influence of surface morphologie of the polycrystalline silicon on field electron emission" by A. A. Evtekh, Thin Solid Films Bd. 337 (1999) S. 261) vorgeschlagen. Dazu wird eine 0,5 µm dicke Schicht aus polykristallinem Silicium mittels CVD bei 620 °C abgeschieden, die dann bei mindestens 900 °C oxidiert wird. Nach dem Entfernen des Oxids verbleiben Mikrospitzen, welche die Feldemission tragen.

Ende 1998 wurde erstmals ein Heißdraht-Hochfrequenzplasma-CVD-Verfahren vorgestellt, bei dem nanoskopische Röhren aus Kohlenstoff (sogenannte 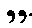 Nanotubes") katalytisch unter Laborbedingungen langsam aufwachsen und wohlgeordnet einen flächenhaften Bestand bilden, der als Feldemitter eingesetzt werden kann ( 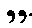 Synthesis of large arrays of well-alligned carbon nanotubes on glass" by Z. F. Ren, Science, Bd. 282 (6. November 1998) S. 1105). Die Substrattemperatur ist für ein spezielles Glas mit 666 °C angegeben. Versuche zeigten, daß derartige Strukturen Stromdichten bei Feldemission von 0,5mA/mm²erreichen, wobei eine Emitterdichte von 10⁹ - 10¹⁰/cm² angegeben ist ( 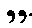 Field emission from aligned high-density graphitic nanofibers" by Y. Chen et al., Applied Physics Letters. Bd. 73 (1998) S. 2119). Bei diesem aufwendigen Verfahren werden Aufwachsraten von maximal einigen Nanometern pro Minute erreicht.

Das Patent US 5903092 beschreibt ein Bauelement für die Feldemission. Ein Bestandteil des Bauelements ist eine Emitterelektrode, die aus einer Vielzahl säulenförmiger Kristalle besteht, die eine Schicht von etwa 500 nm Dicke bilden. Die Autoren betonen explizit, daß diese Kristalle vom Boden bis zur Oberfläche der Schicht wachsen und (gemäß der gezeigten elektronenmikroskopischen Bilder) damit eine Ausdehnung ihrer Längsachse von etwa 500 nm haben. Die Herstellung dieser Kristalle erfolgt durch Gasphasenabscheidung (CVD) bei Temperaturen von 120 bis 500 °C (etwa 393 bis 773 K) und bevorzugterweise bei 320 °C. Für das Funktionieren des Emitters ist wesentlich, daß die in engen physischen Kontakt befindlichen Säulen in einem spitzen Ende auslaufen, was in der Patentschrift explizit ausgeführt wird. Die Oberfläche der Schichten sind entsprechend rauh, was die elektronenmikroskopischen Abbildungen deutlich zeigen.

Schichten aus Wolfram, die mit dem beschriebenen CVD-Verfahren hergestellt werden finden verbreitet Anwendung in mikrolelektronischen Schaltkreisen. Ausführliche Untersuchungen zu derartigen Schichten finden sich in der Literatur (s. beispielsweise 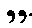 Comparison of mechanical and microstructural properties of hydrogen and silane reduced low pressure CVD tungsten fims" by S. Sivaram et al., J. Vac. Sci. Technol. A Bd. 11 (1993) S. 87 und 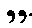 A kinetic study on tungsten deposition from SiH₄ and WF₆" by C. A. van der Jeugd et al., J. Appl. Phys. Bd. 72 (1992) S. 1583).

Eine sehr spezifische, allgemein bekannte Eigenschaft dieser Schichten ist (s. Jeugd et al.), daß bei hohen Verhältnissen der Flüsse von SiH₄ / WF₆ etwa 1 (und größer) und / oder bei Temperaturen kleiner 200 °C signifikante Mengen an Silicium in das Wolfram eingebaut werden. Damit ist die Herstellung reiner Wolfram-Schichten ohne Silicium mit den in der Patentschrift US 5903092 angegebenen, bevorzugten Parametern nicht möglich. Des weiteren ist bekannt (s. Sivaram et al.), daß Schichten von etwa 500 nm Dicke eine Dichte (bezogen auf einkristallines Wolfram) von mindestens etwa 80 % haben und daß die Größe der Kristallite mindestens 80 nm beträgt. Die mittels CVD gewachsenen Wolfram-Schichten weisen typischerweise eine ausgeprägte Rauhigkeit auf (Sivaram et al.).

Damit ergibt sich als wesentliches Fazit: Es ist als Stand der Technik damit allgemein anerkannt, daß 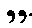 glatte" Schichten (also Schichten, die auf ihrer Oberfläche auf der Skala im Bereich von etwa einigen 0,01 µm bis etwa 10 µm keine ausgeprägten Säulen, Spitzen, Kanten etc. aufweisen) keine signifikante Feldemission aufweisen.

Konventionelle hochschmelzende Metallschichten wie z. B. Wolfram werden alternativ entsprechend dem Stand der Technik mittels Kathodenzerstäubung (sogenanntes Magnetronsputtern, ein Verfahren der physikalischen Dampfabscheidung - PVD) bei einem kleinen Druck-Abstands-Produkt hergestellt, um die für die üblichen Anwendungen (z. B. Metallisierungen für elektronische Bauelemente, Röntgenspiegel) als optimal betrachteten Eigenschaften (das ist vor allem eine möglichst hohe Dichte nahe 100 % des Wertes für das kristalline Metall) zu erzielen. So geben die Autoren im 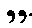 Handbook of Thin Film Process Technology" (edited by D. A. Glockner and S. I. Shah, pp. X2.9:1, IOP Publishing, Bristol, 1995) die Empfehlung, bei einem Abstand von 15 cm und bei einem Druck von 0,6 Pa Argon zu beschichten. Gleiches gilt auch für die Beschichtung mit Molybdän. Dort erstrecken sich die typischen Drücke für die Beschichtung von 0,2 Pa bis 2 Pa (bevorzugte Werte unter 1 Pa) bei einem Abstand von 10 cm ( 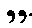 Handbook of Plasma Processing Technology", edited by S. M. Rossnagel, J. J. Cuomo and W. D. Westwood, Noyes Publications, Park Ridge, NJ, 1990).

Die Kathodenzerstäubung hat sich als sehr preiswertes Verfahren zur Beschichtung großer Flächen fest etabliert. So werden beispielsweise Architekturgläser mit Abmaßen von 2,1 m x 3,6 m innerhalb sehr kurzer Zeit mit verschiedenen optischen Materialien beschichtet, wie der Monographie 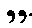 Vakuumbeschichtung" (herausgegeben von G. Kienel, Bd. 5, S. 27, VDI Verlag, Düsseldorf, 1993) zu entnehmen ist.

### Probleme

Der Erfindung liegen folgende Probleme zugrunde:
Alle Verfahren zur Herstellung von Elektronen-Feldemissionsquellen, die auf dem Einsatz von Mikrospitzen basieren, erfordern einen hohen Fertigungsaufwand. Dieser betrifft insbesondere die strukturgebenden Prozesse (z. B. Ätzen unter dem Einsatz spezieller Masken). Dieser Aufwand führt zu hohen Kosten für die Elektronen-Feldemissionsquellen und damit der Bildschirme bzw. anderer Bauelemente. Die strukturgebenden Prozesse mit Masken lassen sich nur an vergleichsweise kleinen Flächen mit typischen Größen von 100 cm² realisieren, die für großflächige Anzeigeelemente nicht ausreichend sind.

Der Einsatz von Diamantschichten zur Realisierung von Elektronen-Feldemissionsquellen erfordert während der Herstellung eine Temperatur von beispielsweise 780 °C (DE 197 27 606 A1). Dadurch kann die Herstellung der Elektronen-Feldemissionsquellen nur auf ausgewählten Substraten (Trägermaterialien) erfolgen. Eine Herstellung auf Substraten aus Glas oder Plastik, die in der Display-Technologie besonderen Einsatz finden, ist nicht möglich.

Beschichtungen aus amorphen Kohlenstoffverbindungen (sowohl der sogenannte diamantartige Kohlenstoff DLC als auch der amorphe Kohlenstoff a-C:H sowie ihre Legierungen) und auch Diamant zersetzen sich durch den Beschuß mit atomarem oder ionisiertem Wasserstoff, Sauerstoff oder Radikalen, die diese und ähnliche Elemente beinhalten. Ein solcher Beschuß tritt naturgemäß beim Betrieb einer Elektronen-Feldemissionsquelle auf. Aus diesem Grunde ist die Lebensdauer einer Feldemissionsquelle auf der Basis einer Kohlenstoffverbindung zeitlich beschränkt. Eine lange Lebensdauer ist aber die wesentliche Voraussetzungen für den dauerhaften Betrieb von Elektronen-Feldemissionsquellen und damit hergestellten Bauelementen.

Nachteile der Herstellung von Emittern auf Basis von Wolfram-Schichten mittels CVD (Patent US 5903092) sind der Einsatz von gefährlichen Gasen wie beispielsweise Silan. Da die Dissoziation der Moleküle thermisch stimuliert ist, muß die Herstellung der Schicht bei Temperaturen erfolgen, die typischerweise 200 °C deutlich übersteigen sollte. (Die bevorzugte Temperatur beträgt 320 °C.) Bei geringeren Temperaturen findet kaum noch eine Abscheidung von Schichten statt, bei etwa 140 °C kommt die Abscheidung vollkommen zum Erliegen (s. o. a. Literatur). Damit ergibt sich als weiterer signifikanter Nachteil (Patent US 5903092), daß der Einsatz preiswerter Substrate beispielsweise aus Kunststoff nicht möglich ist.

Zusammenfassend läßt sich feststellen, daß wegen der hohen Kosten bzw. der fehlenden Langzeitstabilität bei der Realisierungen von Feldemittern es bislang zu keiner breiten kommerziellen Anwendung in Flachbildschirmen gekommen ist.

### Lösung / Erreichte Vorteile der Erfindung

Die oben angeführten Probleme werden durch die flächige Elektronen-Feldemissionsquelle mit den Merkmalen des Anspruches 1 oder 2 und durch ein Verfahren zur Herstellung einer flächigen Feldelektronen-Feldemissionsquelle mit den Merkmalen des Anspruches 21 gelöst.

Die flächige Elektronen-Feldemissionsquelle besteht aus einer Schicht eines hochschmelzenden Metalles (mit einem Schmelzpunkt unter den üblichen Normalbedingungen oberhalb 1800 K entsprechend 1527 °C), deren Dichte im Vergleich zum kristallinen Volumenmaterial des hochschmelzenden Metalls um mindestens 20 % reduziert ist oder deren Basismaterial ein Gemisch verschiedener Metalle ist, von denen mindestens eines ein hochschmelzendes Metall mit einem Schmelzpunkt (unter den üblichen Normalbedingungen) oberhalb 1800 K (entsprechend 1527 °C) ist, und deren Dichte im Vergleich zum kompakten Gemisch der kristallinen Volumenmaterialien gleicher Zusammensetzung wie das Basismaterial um mindestens 20 % reduziert ist.

Die reduzierte Dichte der aktiven Schicht von mindestens 20 % basiert auf einer hohen Konzentration von Nanoporen, die insbesondere als langgestreckte und/oder näherungsweise runde, nanoskopische Hohlräume ausgebildet sein können. Die Größe dieser Gebilde ist abhängig von der Prozeßführung bei der Beschichtung (insbesondere vom Eintrag kinetischer Energie von Atomen und Ionen sowie der Temperatur) und der Dicke der Schicht und beträgt typischerweise etwa 1 nm bis etwa 30 nm in Richtung parallel zur Ebene der Schicht. Aufgrund der Existenz von Nanoporen wird die Schicht auch als nanoporös bezeichnet. In der Schicht sind partiell langgestreckte Strukturen vorhanden, die als Nanosäulen bezeichnet werden. Die Nanosäulen haben typischerweise eine Ausdehnung parallel zur Schichtebene von etwa einem Nanometer bis zu etwa 100 Nanometer und eine Ausdehnung der parallel zur Schichtnormalen von etwa 5 Nanometer bis etwa 1000 Nanometer. Die Größe dieser Strukturen ist derart gering, daß Untersuchungen mittels Kraftmikroskopie (AFM), die prinzipiell Auflösungen an Oberflächen bis in den Bereich weniger nm gestattet, die aktive Schicht als kaum strukturiert und damit glatte Schicht ausweisen. Gemäß dem bisherigen Kenntnisstand der Technik sollten derartigen Strukturen keine Feldemission aufweisen.

Für dünne Schichten im Bereich bis etwa 100 nm Dicke kann die Dichte und die Dicke durch die Methode der sog. Röntgenreflektometrie bestimmt werden, die beispielsweise in dem Artikel 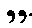 Fast and accurate assessment of nanometer layers using grazing x-ray reflectometry" (von C. Schiller et al, Philips J. Res. Bd. 47 (1993) S. 217 ff) beschrieben ist. Dabei ist die Dichte der Schicht proportional ihrer Dispersion für Röntgenstrahlung. Die Angabe der Dichte einer Schicht erfolgt dann vorzugsweise bezüglich des Wertes für das zumeist kristalline Volumenmaterial desselben Elements oder Elementengemisches, wobei letzterer gleich 100 % gesetzt wird. Volumenmaterial heißt dabei im Gegensatz zu einer Dünnschicht eine makroskopisch große Probe des Elements oder Elementengemisches, wie es beispielsweise ein Blech oder ein Gußkörper darstellt. Bei nicht kristallinen Elementgemischen ist die Dichte das nach Konzentrationen gewichtete arithmetische Mittel der Dichten der einzelnen kristallinen Volumenmaterialien. Die Existenz von Nanoporen und Nanosäulen kann mittels hochauflösender Transmissions-Elektronenmikroskopie (TEM) an Dünnschliffen von Schichten direkt oder durch Streuexperimente (z. B. Röntgenkleinwinkelstreuung) indirekt nachgewiesen werden.

Als Basismaterial wird dasjenige Metall oder Metallgemisch bezeichnet, aus dem die aktive Schicht hauptsächlich besteht. Das Basismaterial hat vorzugsweise einen Masseanteil von mindestens 50 % an der Zusammensetzung der aktiven Schicht. Das hochschmelzende Metall hat vorzugsweise einen Masseanteil von mehr 20 % am Basismaterial.

Da nachfolgend auch Schichtsysteme für Elektronen-Feldemissionsquellen vorgeschlagen werden, die aus mehreren einzelnen Schichten bestehen, wird als aktive Schicht einer flächigen Elektronen-Feldemissionsquelle diejenige Schicht bezeichnet, die aufgrund der reduzierten Dichte und der damit verbundenen Existenz von Nanoporen und Nanosäulen essentiell für das Funktionieren des Schichtsystems als Elektronen-Feldemissionsquelle ist.

Als Basisschicht eines Schichtsystems für eine flächige Elektronen-Feldemissionsquelle wird diejenige Schicht oder werden diejenigen Schichten bezeichnet, die sich zwischen der aktiven Schicht und dem Substrat befindet oder befinden. Als Top (oder Deckschicht) eines Schichtsystems für eine flächige Elektronen-Feldemissionsquelle wird diejenige Schicht oder werden diejenigen Schichten bezeichnet, die sich an der Grenzfläche der aktiven Schicht befindet oder befinden, die einem für den Betrieb notwendigen Vakuum zugewandt ist.

Verfahrensgemäß wird eine flächige Elektronen-Feldemissionsquelle, vorzugsweise obiger Art hergestellt, indem die aktive Schicht mit einem oder mehreren verschiedenen Verfahren der physikalischen Dampfabscheidung (PVD) hergestellt wird, wobei die Prozeßführung des Verfahrens derart zu gestalten ist, daß durch einen hinreichend geringen Eintrag von kinetischer Energie und Wärme die Ausbildung der aktiven Schicht reduzierter Dichte ermöglicht wird. Einzelheiten über Verfahren der Dünnschichttechnologie, deren Prozeßführung gemäß obigem zu gestalten ist, sind insbesondere der oben erwähnten Monographie 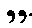 Vakuumbeschichtung" entnehmbar.

Die mit der Erfindung erzielten Vorteile bestehen darin, daß die Elektronen-Feldemissionsquelle mit dem heutigen Stand der Techniken der physikalischen Dampfabscheidung (PVD - insbesondere der Kathodenzerstäubung oder synonym Sputtern mit sogenannten Magnetrons, wie sie beispielsweise zur großflächigen Beschichtung von Architekturgläsern benutzt werden) auf großen ebenen oder gekrümmten Flächen mit der Ausdehnung im Bereich von Metern hergestellt werden kann. Dabei wird die Elektronen-Feldemissionsquelle als eine zusammenhängende dünne Schicht abgeschieden. Zur Herstellung der Elektronen-Feldemissionsquelle selbst ist außer dem Prozeß der Auftragung mittels Dünnschichttechnologie kein weiterer Prozeßschritt erforderlich (insbesondere entfällt die bei den Spindt-Kathoden übliche Strukturierung der Emitterquelle). Eine Strukturierung ist lediglich für die Realisierung des Bauelements entsprechend seiner spezifischen Geometrie nötig.

Die mit der Erfindung erzielten Vorteile bestehen auch darin, daß aufgrund der Emission aus der gesamten Schicht, eine im Vergleich zu in anderen Patentschriften genannten Feldemittern sehr hohe Stromdichte homogen über große Flächen realisiert werden kann. Damit ist der Einsatz der Elektronen-Feldemissionsquellen bei geringen Feldstärken und Spannungen möglich, was eine besonders günstige Voraussetzung für die technische Anwendung ist.

Die mit der Erfindung erzielten Vorteile bestehen des weiteren darin, daß aufgrund der vorzugsweise geringen Schichtdicke und der möglichen großflächigen Abscheidung mittels Sputter-Beschichtung eine sehr kostengünstige Herstellung der Elektronen-Feldemissionsquellen möglich ist.

Die mit der Erfindung erzielten Vorteile bestehen des weiteren darin, daß die typischen Herstellungstemperaturen im Bereich von 300 K bis 700 K und bevorzugterweise unter 400 K liegen. Damit kann die in der vorliegenden Erfindung beschriebene Elektronen-Feldemissionsquelle praktisch auf beliebigen Trägermaterialien und insbesondere auf Glas- und Kunststoffsubstraten, die in der Displaytechnologie eine herausragende Rolle spielen, abgeschieden werden.

Die mit der Erfindung erzielten Vorteile bestehen des weiteren darin, daß zur Herstellung der Elektronen-Feldemissionsquelle preiswerte, ungefährliche und nichttoxische Materialien (insbesondere metallische Sputtertargets und Edelgase) verwendet werden.

Die mit der Erfindung erzielten Vorteile bestehen des weiteren darin, daß das Basismaterial der vorliegenden Elektronen-Feldemissionsquellen ein oder mehrere Metalle mit einem hohen Schmelzpunkt enthält. Daraus resultiert eine hohe thermische Stabilität der Emitter, die einen Einsatz auch bei erhöhten Temperaturen (bis zur Herstellungstemperatur von 700 K und noch höher) ermöglicht.

Die mit der Erfindung erzielten Vorteile bestehen des weiteren darin, daß die hohe atomare Masse der Basismaterialien (bis 184 amu für Wolfram) zusammen mit der
hohen Oberflächenbindungsenergie (entspricht der Sublimationswärme - bis zu 8,9 eV pro Atom für Wolfram) eine gute Stabilität des Emitters gegen Beschuß mit positiven Ionen aus dem Restgas, die eine Zerstörung des Emitters durch den Effekt der Kathodenzerstäubung bewirken, gewährt. Des weiteren wird eine sehr gute Korrosionsfestigkeit gegen reaktive Spezies (Radikale), die im Restgas entstehen, erzielt. Insbesondere wird - verglichen mit Diamant und anderen Kohlenstoffbasierten Elektronen-Feldemissionsquellen - die Korrosionsbeständigkeit gegenüber Sauerstoff- und Wasserstoffhaltigen Gasen (z. B. Wasser), die plasmachemische Ätzprozesse an Kohlenstoffverbindungen bewirken, verbessert. Damit verbessert sich die Langzeitstabilität der Bauelemente. Andererseits sinken die Anforderungen an das Vakuum, das im Bauelement herrschen muß (die Langzeitstabilität des Emitters ist auch bei einem höheren Restgasdruck im Flachdisplay gegeben), was wiederum die Kosten für die Fertigung des Displays oder anderer Bauelemente reduziert.

### Weitere Ausgestaltung der Erfindung

Vorzugsweise ist gemäß Patentanspruch 3 die Porösität der aktiven Schicht so, daß diese eine im Vergleich zum kristallinen Volumenmaterial des hochschmelzenden Metalls oder zum kompakten Basismaterial um etwa 30 bis 60 % reduzierte Dichte und bevorzugterweise etwa 50 % Dichtereduktion aufweist.

Vorzugsweise ist die aktive Schicht dünn, wobei sie gemäß Patentanspruch 4 typischerweise eine Dicke von etwa 5 nm bis 5000 nm hat.

Gemäß Patentanspruch 5 weisen die Nanoporen typische Abmessungen von etwa 1 nm bis etwa 30 nm (in Richtungen parallel zur Schichtebene) auf.

Das Basismaterial besteht aus mindestens einem hochschmelzenden Metall mit einem Schmelzpunkt oberhalb 1800 K und besteht vorzugsweise aus einem oder mehreren Metallen (Metallgemisch) aus den Nebengruppen IVB, VB und VIB des Periodensystems der Elemente. Dies sind gemäß Patentanspruch 6: Titan, Vanadium, Chrom, Zirconium, Niobium, Molybdän, Hafnium, Tantal und Wolfram. Gemäß Patentanspruch 7 kann das Basismaterial ein oder mehrere weitere Metalle enthalten.

Eine weitere vorteilhafte Ausgestaltung der Erfindung ist im Patentanspruch 8 angegeben. Durch die Legierung mit einem oder mehreren Elementen aus der Gruppe Bor, Kohlenstoff, Stickstoff oder Sauerstoff wird insbesondere die Elektronenaffinität der dünnen aktiven Schicht maßgeblich verändert, was zu einer weiteren Erhöhung der Stromdichte bei gleicher Feldstärke führt. Bei der Legierung wird die Ausbildung der Nanoporosität und damit die Realisierung einer verminderten Dichte der aktiven Schicht unterstützt. Die chemische Stabilität gegen reaktive Spezies sowie die Festigkeit gegen einen Ionenbeschuß bleibt im Vergleich zu den reinen Metallschichten erhalten. Die gesamte Konzentration der genannten Elemente in der Legierung liegt gemäß Patentanspruch 9 im Bereich zwischen 0,1 Atom-% und 80 Atom-%.

Weitere vorteilhafte Ausgestaltungen der Erfindung sind in den Patentansprüchen 10 bis 13 angegeben. Durch die zur Herstellung nanoporöser Schichten erforderlichen geringen Temperaturen und geringen eingetragenen kinetischen Energien wird das Wachstum hochschmelzender Metalle in einer amorphen Phase bzw. mit sehr kleinen Kristallitgrößen (Nanokristallite) gefördert. Derartige amorphe bzw. nanokristalline Phasen wiederum stabilisieren die nanoporöse Struktur der Schichten, die ihre geringe Dichte bewirkt. Aus diesem Grunde ist es vorteilhaft (wie in den Ansprüchen 10 bis 13 angegeben), die Zusammensetzung der Schicht auf die amorphe Phase bzw. eine bestimmte maximale Kristallitgröße zu beschränken, was durch die geeignete Wahl der Prozeßparameter bei der Herstellung möglich ist.

Weitere vorteilhafte Ausgestaltungen der Erfindung sind in den Patentansprüchen 14 bis 18 angegeben. Die aktive Schicht, die nanoporös ist, Nanosäulen aufweist und eine reduzierte Dichte hat, besitzt eine schlechte Querleitfähigkeit. Diese kann zu einer inhomogenen Verteilung der Feldstärke und damit der Stromstärke fuhren, beispielsweise wenn die aktive Schicht auf einem Substrat angeordnet ist, das aus einem Isolator besteht, und die Fläche des Emitters groß ist. Aus diesem Grund ist bevorzugt unter der aktiven Schicht eine leitende oder halbleitende Basisschicht angeordnet, die sich auf einem Substrat (Schichtträger) befindet. Bevorzugt weist die Basisschicht eine höhere Leitfähigkeit als die aktive Schicht auf; insbesondere in Querrichtung.

Die Basisschicht kann eine herkömmliche Metallschicht einer Dicke von 10 nm bis 10 µm sein, die eine hohe Leitfähigkeit aufweisen kann. Sie kann z. B. aus Aluminium, Kupfer oder aber auch aus den unter Patentanspruch 6 aufgelisteten Metallen oder deren Gemischen (diese allerdings als konventionelle Schicht, d. h. mit einer hohen Dichte von über 90 % des kristallinen Metalls oder Metallgemisches) bestehen. Die Wahl des Metalls und die Dicke der Basisschicht richten sich insbesondere nach den geometrischen Abmessungen des Emitters sowie der zu realisierenden Stromdichte. Falls die Basisschicht aus einem oder mehreren Halbleitermaterialien besteht, können darin wie beim Chip schaltbare Strukturen integriert sein.

Zusätzlich kann die Basisschicht der Ausbildung einer definierten Grenzfläche (Unterlage) für die Herstellung des flächigen Feldemitters dienen. Dies kann beispielsweise nötig werden, wenn einfache und kostengünstige Substrate, wie Gläser, Bleche, Plastik oder Folien, deren Oberfläche keine genau definierte Struktur aufweisen, Verwendung für Flachbildschirme finden. Durch die Auftragung der Basisschicht vorzugsweise mit einem Verfahren der physikalischen Dampfabscheidung (typischerweise kann dies die Sputter-Beschichtung sein) entsteht aus kostengünstige Weise eine Unterlage mit einer definierten Oberfläche. Die Dicke der Basisschicht ist abhängig von der eingesetzten Stromdichte, der flächenhaften Ausdehnung des Emitters und der Rauhigkeit des Substrats. Der Wert soll im Bereich von 10 nm bis etwa 10 µm liegen.

Ein Substrat ist direkt unter der aktiven Schicht und/oder unter der Basisschicht angeordnet. Bevorzugt ist das ein Isolator. Es kann sich dabei jedoch auch um einen Halbleiter oder um ein Metall handeln.

Weitere vorteilhafte Ausgestaltungen der Erfindung sind in den Patentansprüchen 19 und 20 angegeben. Zur Modifikation des Emissionsverhaltens des Feldemitters ist es sinnvoll, eine oder mehrere Lagen mit einer Dicke von jeweils zwischen etwa 1 nm bis etwa 20 nm aufzubringen. Mittels dieser als Deckschicht (oder Top) des Emitters bezeichneten Lage (bzw. Lagen) kann beispielsweise durch den Einsatz von Kohlenstoff oder Aluminiumnitrid die Elektronenaffinität des Emitters gezielt beeinflußt werden. Der Einsatz von isolierenden Materialien bietet die Möglichkeit, sogenannte Tunneleffekte beim Austritt der Elektronen aus dem Emitter zu nutzen. Wird auf dieser isolierenden Lage noch einmal eine dünne Lage eines Metalls oder Metallcluster mit einem typischen Durchmesser von wenigen Nanometern aufgetragen, so kann auch der Effekt des resonanten Tunnelns in die diskreten Zustände der zuoberst befindlichen Metall-Cluster genutzt werden. Durch die Aufbringung der Deckschicht kann auch die Stabilität des Emitters gegen Ionenbeschuß oder chemisch aktive Radikale gegebenenfalls entsprechend der spezifischen Anforderungen modifiziert werden.

Die Herstellung der Elektronen-Feldemissionsquellen erfolgt als dünne Schicht mit einem der üblichen Verfahren der physikalischen Dampfabscheidung (PVD), wie es im Patentanspruch 21 beschrieben ist. Wesentlich für die Prozeßführung bei allen PVD-Verfahren ist, daß der Eintrag von kinetischer Energie und Wärme in die wachsende Schicht hinreichend gering halten wird, um die Ausbildung der reduzierten Dichte durch nanoporösen Strukturen zu ermöglichen. Zu den PVD-Verfahren gehören insbesondere die Techniken der Sputter-Beschichtung, der Elektronenstrahlverdampfung, der thermischen Verdampfung und der Verdampfung mittels Bogenentladung.

Die Wachstumstemperatur liegt zwischen 300 und 600 K und bevorzugterweise unterhalb 400 K (Patentanspruch 23). Dazu muß das Verfahren der physikalischen Dampfabscheidung so gesteuert werden, daß durch den Beschichtungsprozeß selbst keine Aufheizung oberhalb der gewünschten Temperatur erfolgt. Auch aus diesem Grunde muß daß der Energiefluß auf die wachsende Schicht gering gehalten werden, was ebenfalls eine günstige Bedingung für das Wachstum der Schichten reduzierter Dichte ist.

Das Wachstum einer porösen Schicht mit Nanostrukturen erfolgt vorzugsweise mit einer verminderten Aufwachsrate. Die bevorzugte Aufwachsrate soll kleiner als 1 nm/s sein und beträgt vorzugsweise zwischen 0,01 nm/s und 0,1 nm/s (Patentanspruch 24).

Eine weitere vorteilhafte Ausgestaltung der Erfindung ist im Patentanspruch 25 angegeben. Die entsprechenden Bedingungen für die Herstellung von Schichten reduzierter Dichte können durch Sputter-Beschichtung wie folgt realisiert werden: Der Abstand zwischen Target und Schichtträger beträgt zwischen 3 und 30 cm, der Druck des Edelgases (zumeist Argon) bei der Sputter-Beschichtung beträgt zwischen 1 und 100 Pa. Das Produkt aus Abstand und Druck ist vorzugsweise größer als 20 Pa cm, wobei der bevorzugte Wert 50 Pa cm beträgt. Diese Werte sind vollkommen atypisch für die Herstellung konventioneller Schichten hochschmelzender Metalle.

Die Herstellung der aktiven Schicht mit Basisschicht und Deckschicht kann innerhalb eines Vakuumzyklus in einer Beschichtungsapparatur oder in mehreren Zyklen in verschiedenen Beschichtungsapparaturen erfolgen. Die Technik der Beschichtung kann für die alle Schichten der Elektronen-Feldemissionsquelle identisch sein, oder es können verschieden Techniken der physikalischen Dampfabscheidung Anwendung finden. Diese Möglichkeiten sollen gemäß dem konkreten Schichtsystem und der zum Einsatz kommenden Technologie modifiziert werden. Diese Ausgestaltung der Erfindung wird im Patentanspruch 26 beschrieben.

Eine weitere vorteilhafte Ausgestaltung der Erfindung ist im Patentanspruch 27 angegeben. Zur weiteren Ausprägung der nanoporösen Struktur mit Nanosäulen in den Säulen aufweisenden Schichten können diese durch chemisches (Naß-) Ätzen oder plasmachemisches Ätzen teilweise abgetragen werden. Dadurch prägen sich die Nano-Zwischenräume stärker aus und die Kuppen der Nanosäulen werden teilweise abgetragen. So kommt es zu einer Veränderung der geometrischen Abmaße der Säulen, was eine lokale Erhöhung der Feldstärke und damit einen stärkeren Emissionsstrom durch die einzelne Säule zur Folge hat.

### Ausführungsbeispiele

Im folgendem werden einige Beispiele der erfindungsgemäßen großflächigen Elektronen-Feldemissionsquellen und des Verfahrens zu deren Herstellung vorgestellt. Dementsprechend können Elektronen-Feldemissionsquellen realisiert werden.

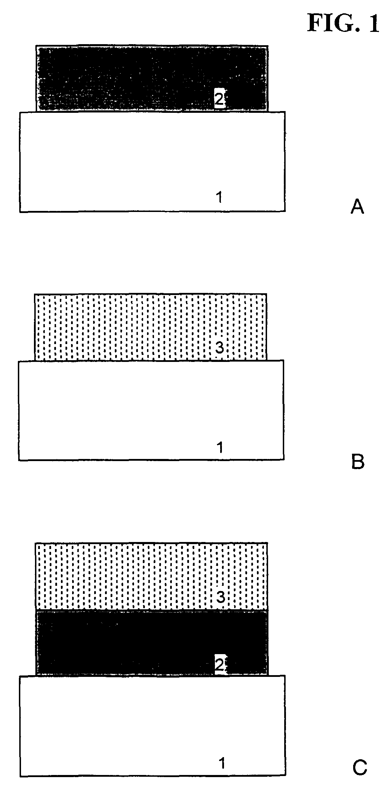

Die Fig. 1 zeigt schematisch verschiedene Schichtstrukturen, wie sie zur Untersuchung der Elektronenemission hergestellt wurden. Dabei ist die Schicht (2) eine entsprechend dem Stand Technik hergestellte (konventionelle) dichte Metallschicht und Schicht (3) die erfindungsgemäße Schicht reduzierter Dichte. Die Schichten wurden auf Planern Substraten (1) aus Corinna 7059 Glas bzw. in einem Fall auf poliertem Chromnickel Stahl abgeschieden. Beide Schichten (2) bzw. (3) wurden jeweils einzeln untersucht und sind für die kompakte Schicht mit Struktur A bzw. für die erfindungsgemäß hergestellte aktive Schicht mit Struktur B veranschaulicht. Struktur C ist die Kombination aus den beiden Schichten (2) und (3) zu einer Doppelschicht, wobei die aktive Schicht (3) zuoberst befindlich ist und somit für die Anwendung als Elektronen-Feldemissionsquelle an das Vakuum grenzt, die Schicht (2) fungiert in der Struktur C als Basis.

In Fig. 2 wird das Emissionsverhalten der die Erfindung betreffenden Ausführungsbeispiele 1 bis 4 anhand ihrer Spannungs-Strom-Kennlinien vorgestellt.

In Fig. 3 ist eine Aufnahme eines typischen, 1 µm x 1 µm großen Gebietes der Oberfläche einer erfindungsgemäß hergestellten Elektronen-Feldemissionsquelle (Ausführungsbeispiel 3) dargestellt, welche aus dem hochschmelzenden Metall Molybdän besteht. Diese Aufnahme ist mittel Kraftmikroskopie erstellt, die Überhöhung in vertikaler Richtung beträgt einen Faktor 5.

In Fig. 4 wird das Emissionsverhalten des die Erfindung betreffenden Ausführungsbeispiels 5 (jeweils auf einem Substrat aus Glas bzw. Chrom-Nickel Stahl) anhand ihrer Spannungs-Strom-Kennlinien vorgestellt.

In Fig. 5 ist eine Aufnahme eines typischen, 1 µm x 1 µm großen Gebietes der Oberfläche einer erfindungsgemäß hergestellten Elektronen-Feldemissionsquelle (Ausführungsbeispiel 5) dargestellt, welche aus dem hochschmelzenden Metall Molybdän besteht. Diese Aufnahme ist mittel Kraftmikroskopie (AFM) erstellt, die Überhöhung in vertikaler Richtung beträgt einen Faktor 5.

In Fig. 6 ist eine hochauflösende Aufnahme mittels Transmissions-Elektronenmikroskopie einer erfindungsgemäßen aktiven Schicht reduzierter Dichte (Ausführungsbeispiel 6) aus Molybdän dargestellt.

Die erfindungsgemäßen Schichtstrukturen, die beispielhaft aus den hochschmelzenden Metallen Molybdän und Wolfram (bzw. deren Oxide) bestehen, werden wie folgt als Ausführungsbeispiele erläutert und das Verfahren zu ihrer Herstellung beschrieben:

### Ausführungsbeispiel 1

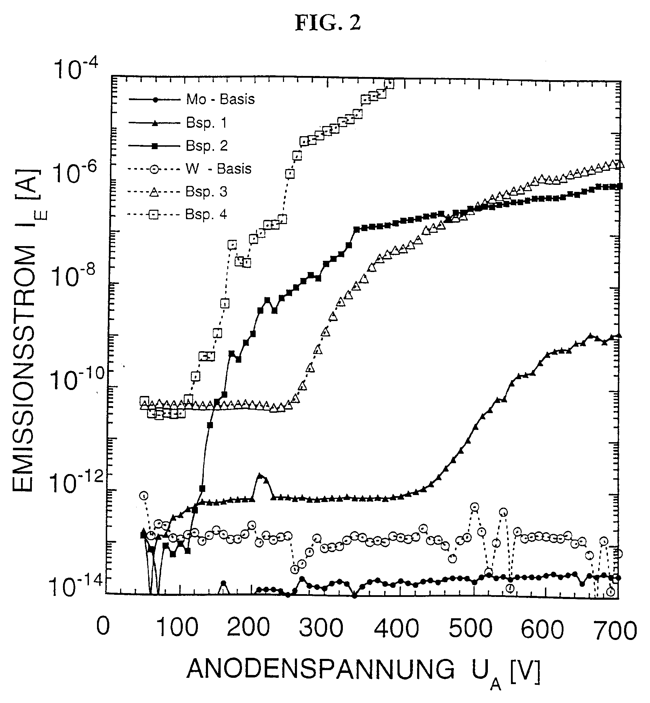

Ausführungsbeispiel 1 ist eine Schicht der in Fig. 1 gezeigten Struktur B aus Molybdän mit einer Schichtdicke von 20 nm, welche mittels Röntgenreflektometrie gemessen wurde. Die Schicht wurde auf einem Substrat aus Corning 7059 der Größe 15 x 15 mm² mittels Magnetronsputtern abgeschieden. Der Abstand zwischen Magnetronkathode und Substrat betrug 8 cm. Die Kathode bestand aus Molybdän der Reinheit 99,95% und besaß einen Durchmesser von 90 mm. Als Sputtergas diente Argon der Reinheit 99,9999 %. Die weiteren Parameter zur Herstellung waren wie folgt: Mittels Gleichstrom eingebrachte Sputterleistung P=20 W, Substrattemperatur T=473 K, Gasfluß von Argon F=25 sccm entsprechend einem Argondruck von 5,6 Pa. Auf diese Weise wurde eine Beschichtungsrate von 0,04 nm/s realisiert. Die mittels Röntgenreflektometrie ermittelte Dichte dieser Schicht beträgt 48 % der Dichte von kristallinem Molybdän. In Auswertung der Röntgendiffraktometrie ergibt sich, daß die aktive Schicht amorph ist. Hochauflösende Transmissions-Elektronenmikroskopie zeigt, daß die Schicht elongierte Hohlräume mit typischen Ausdehnungen parallel zur Schichtebene von etwa 1 bis 3 nm besitzt. Die Längsausdehnung dieser Hohlräume (parallel zur Schichtnormalen) sowie der durch sie partiell gebildeten Nanosäulen entspricht etwa der Schichtdicke von 20 nm. Mittels Photoelektronenspektrometrie wurde gefunden, daß diese Schicht teilweise oxidiert ist. Das Elektronen-Emissionsverhalten des Ausführungsbeispiels (1) ist in Fig. 2 dargestellt.

### Ausführungsbeispiel 2

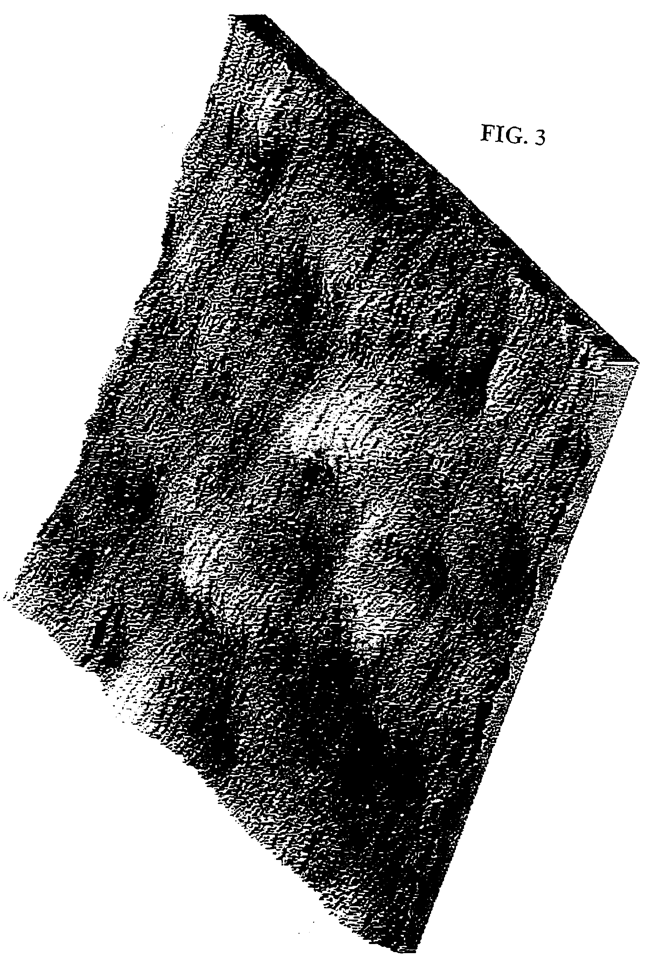

Ausführungsbeispiel 2 ist eine Doppelschicht gemäß der in Fig. 1 gezeigten Struktur C mit Schichtdicken von jeweils 20 um für die untere Schicht (Basis) und der oberen, erfindungsgemäßen aktiven Schicht des Metalls Molybdän. Die Herstellung des Ausführungsbeispiels 2 erfolgte unter identischen Parametern zum Ausführungsbeispiel 1 mit dem einzigen Unterschied, daß bei der Herstellung der Basis der Argonfluß F=1 sccm und der Druck entsprechend 0,4 Pa betrugen. Die Beschichtungsrate war 0,08 nm/s. Mittels Röntgenreflektometrie wurde die Dichte der Basis zu 96 % des Wertes von kristallinem Molybdän bestimmt. Damit entspricht diese Schicht dem typischen Material, wie es in vielen Anwendungen als Stand der Technik für dünne Schichten realisiert ist. Aus Fig. 2 läßt sich erkennen, daß die Basis allein keinerlei signifikante Feldemission verursacht. Auf eine andere, mit gleichen Parametern hergestellte Basis wurde ohne Unterbrechung des Vakuums eine Schicht gemäß Ausführungsbeispiel 1 und mit den dort beschriebenen Parametern abgeschieden. Wie aus dem Elektronen-Emissionsverhalten in Fig. 2 zu erkennen ist, führt die Verwendung der Struktur C im Vergleich zum Ausführungsbeispiel 1 zu einer Erhöhung des Emissionsstromes infolge der Reduzierung des Widerstandes beim Stromfluß quer durch die Struktur. Wie aus der Fig. 3 zu entnehmen ist, zeigt die Oberfläche der erfindungsgemäßen Schicht im Ausführungsbeispiel keinerlei ausgeprägte Säulen, Spitzen, Kanten etc. sondern ist praktisch glatt (man beachte die Überhöhung um den Faktor 5 in vertikaler Richtung!), womit die Besonderheit der erfindungsgemäßen aktiven Schicht reduzierter Dichte deutlich bewiesen ist. Der maximale Höhenunterschied im dargestellten Gebiet von 1 µm x 1 µm beträgt 6,5 nm und die RMS-Rauhigkeit (Halbwertsbreite der Gauss-schen Höhenverteilung) beträgt 0,87 nm. Vergleiche zeigen, daß die Oberfläche des Ausführungsbeispiels 2 damit der Oberfläche der Mo-Basis, die aber keinerlei Emission zeigt, praktisch identisch ist.

### Ausführungsbeispiel 3

Ausführungsbeispiel 3 ist eine Einzelschicht des Metalls Wolfram der in Fig. 1 gezeigten Struktur B mit einer Schichtdicke von 30 nm, die unter identischen geometrischen Bedingungen (Targetdurchmesser, Abstand), Verwendung gleicher Substrate und gleicher Leistung wie Ausführungsbeispiel 1 realisiert wurde. Dabei fand eine Kathode aus Wolfram der Reinheit 99,95 % Verwendung, der Argonfluß betrug F=30 sccm entsprechend einem Druck von p=6,7 Pa. Es wurde eine Beschichtungsrate von 0,05 nm/s realisiert. Die mittels Röntgenreflektometrie ermittelte Dichte dieser Schicht beträgt 52 % der Dichte von kristallinem Wolfram. Mittels Photoelektronenspektrometrie wurde gefunden, daß in dieser Schicht Sauerstoff einer Konzentration von 25 Atom-% enthalten ist. In Auswertung der Röntgendiffraktometrie ergab sich, daß die aktive Schicht amorph ist. Das Elektronen-Emissionsverhalten des Ausführungsbeispiels 3 ist in Fig. 2 dargestellt.

### Ausführungsbeispiel 4

Ausführungsbeispiel 4 ist eine Doppelschicht gemäß der in Fig. 1 gezeigten Struktur C mit Schichtdicken von jeweils 30 nm für die untere Schicht (Basis) und der oberen, erfindungsgemäßen aktiven Schicht des Metalls Wolfram. Die Herstellung des Ausführungsbeispiels 4 erfolgte unter identischen Parametern zum Ausführungsbeispiel 3 mit dem einzigen Unterschied, daß bei der Herstellung der Basis der Argonfluß F=1 sccm und der Druck entsprechend 0,4 Pa betrugen. Die Beschichtungsrate war 0,07 nm/s. Die mittels Röntgenreflektometrie ermittelte Dichte dieser Schicht beträgt 99 % der Dichte von kristallinem Wolfram. Damit entspricht diese Schicht dem typischen Wolfram, wie es in vielen Anwendungen als Stand der Technik realisiert ist. Aus Fig. 3 läßt sich erkennen, daß die Basis allein zu keinerlei signifikantem Emissionsstrom führt. Auf eine andere, mit gleichen Parametern hergestellte Basis wurde eine Schicht gemäß Ausführungsbeispiel 3 und mit den dort beschriebenen Parametern abgeschieden. Wie aus dem Elektronen-Emissionsverhalten in Fig. 3 zu erkennen ist, führt die Verwendung der Struktur C im Vergleich zum Ausführungsbeispiel 3 zu einer Erhöhung des Emissionsstromes infolge der Reduzierung des Widerstandes beim Quertransport durch die Struktur.

Die Spannungs-Strom-Kennlinien in Fig. 3 wurden für alle Proben mit der gleichen Messeinrichtung aufgenommen, wobei ein konstanter Abstand von 20 µm zwischen der Probe, die als kalte Kathode negativ gepolt ist, und der punktförmigen Anode eingehalten wurde. Der Druck in der Vakuumanlage war für alle Messungen im Bereich 10⁻⁸ bis 10⁻⁹ mbar (Ultrahochvakuum).

Die gemäß dem Stand der Technik hergestellten Molybdän- und Wolframschichten (Mo- und W-Basis) ergeben keine Elektronenemission, auch nicht bei hohen Spannungen von 1000 Volt, was einer äußeren Feldstärke von 50 V/µm entspricht. Die aufgenommenen Kennlinien entsprechen dem Leckstrom über den Isolationswiderstand. Dagegen zeigen die Ausführungsbeispiele 1 bis 4 der erfindungsgemäßen Elektronen-Feldemissionsquelle aus Molybdän und Wolfram (bzw. deren Oxide) eine hervorragende Elektronenemission.

Bei den Einzelschichten (Beispiele 1 und 3) werden Stromanstiege von über 5 Dekaden gemessen, bei den Doppelschichten (Beispiele 2 und 4) sogar über 6 Dekaden bei geringeren Anodenspannungen. Die Begrenzung des Stromes resultiert einzig aus der Meßanordnung. So kann beim Ausführungsbeispiel 4 schon bei einer elektrischen Feldstärken ab 5 V/µm ein Ansteigen des Stromes durch Elektronen-Feldemission gemessen werden. Die schlechteren Emissionseigenschaften der erfindungsgemäßen Einzelschichten sind durch den hohen Widerstand beim Stromfluß quer durch die Schichten bedingt. Für die nanoporösen Molybdän- bzw. Wolframschichten, die in den Anwendungsbeispielen beschrieben sind, beträgt der Wert des spezifischen Widerstandes 10⁻² Ω cm. Damit tritt ein Querwiderstand von einigen Kiloohm auf, der den Emissionsstrom begrenzt.

Die besseren Elektronenemissionen werden bei den Ausführungsbeispielen 2 und 4 erreicht, bei denen die Basisschicht einen geringen spezifischen Widerstand besitzt, der für das Basisschicht aus Molybdän bzw. Wolfram einen typischen Wert von 5 10⁻⁵ Ω cm besitzt.

### Ausführungsbeispiel 5

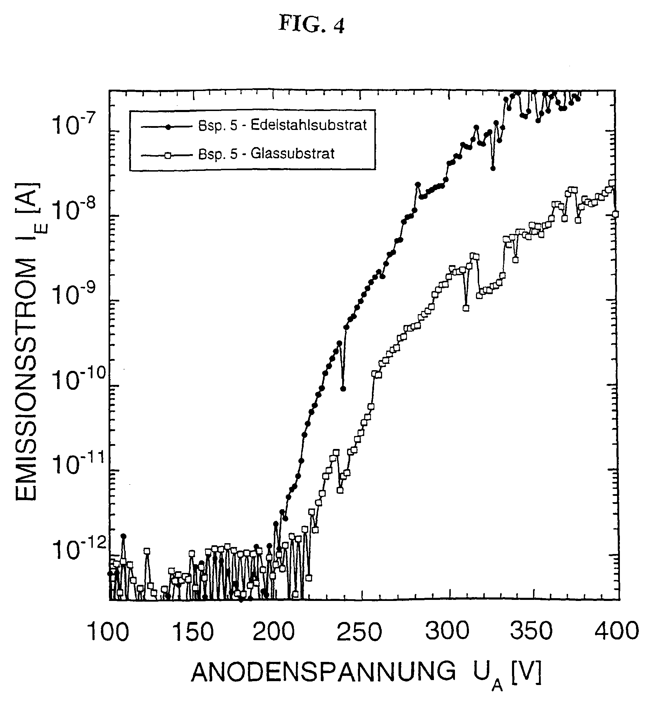

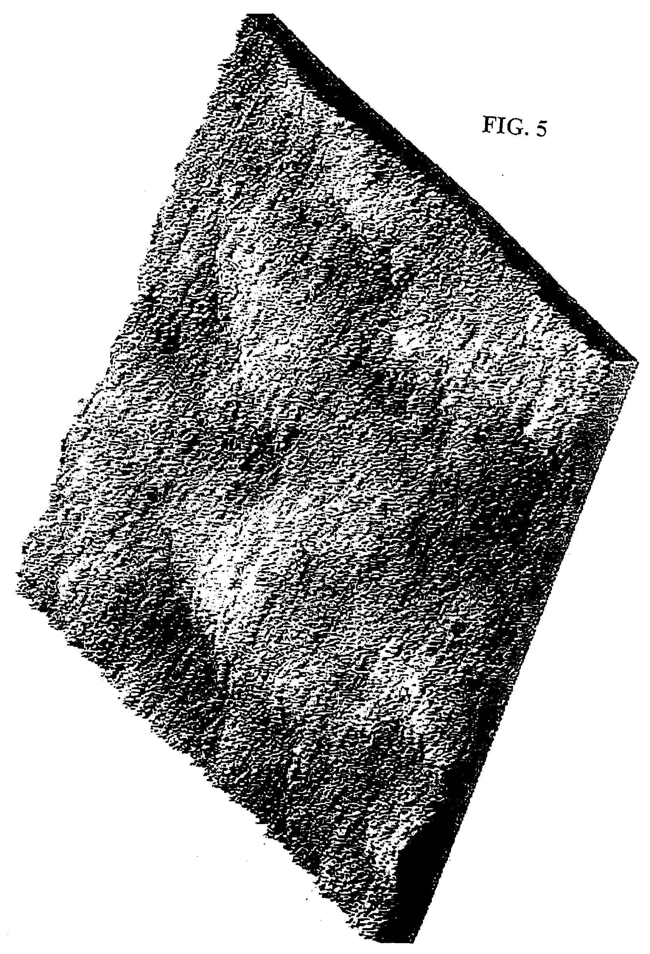

Die Herstellung des Ausführungsbeispiels 5 erfolgte unter identischen Parametern zum Ausführungsbeispiel 1 mit den Unterschieden, daß die Substrattemperatur bei der Herstellung T=373 K betrug, die Schichtdicke auf 100 nm eingestellt wurde und sowohl Glas als auch Chrom-Nickel Stahl als Substrat Verwendung fanden. Aus der Fig. 4 lassen sich wiederum die guten Emissionseigenschaften der erfindungsgemäßen Schicht erkennen. Des weiteren zeigt sich, daß durch Verwendung eines elektrisch leitenden Substrates die negativen Effekte der geringen lateralen Leitfähigkeit, welche den Emissionsstrom reduziert, überwunden werden können. Die mittels Röntgenreflektometrie ermittelte Dichte dieser Schicht beträgt 51 % der Dichte von kristallinem Molybdän. In Auswertung der Röntgendiffraktometrie ergibt sich eine mittlere Kristallitgröße (parallel zur Schichtnormalen) für die Molybdän-Schicht von 9 nm. Wie aus der Fig. 5 zu entnehmen ist, zeigt die Oberfläche der erfindungsgemäßen Schicht auf Glas auch in diesem Ausführungsbeispiel keinerlei ausgeprägte Säulen, Spitzen, Kanten etc. sondern ist praktisch glatt (man beachte die Überhöhung um den Faktor 5 in vertikaler Richtung!), womit die Besonderheit der erfindungsgemäßen aktiven Schicht reduzierter Dichte deutlich bewiesen ist. Der maximale Höhenunterschied im dargestellten Gebiet von 1 µm x 1 µm beträgt 5,5 nm und die RMS-Rauhigkeit (Halbwertsbreite der Gauss-schen Höhenverteilung) beträgt 0,69 nm. Damit ist diese Schicht sogar noch glatter als Ausführungsbeispiel 2.

### Ausführungsbeispiel 6

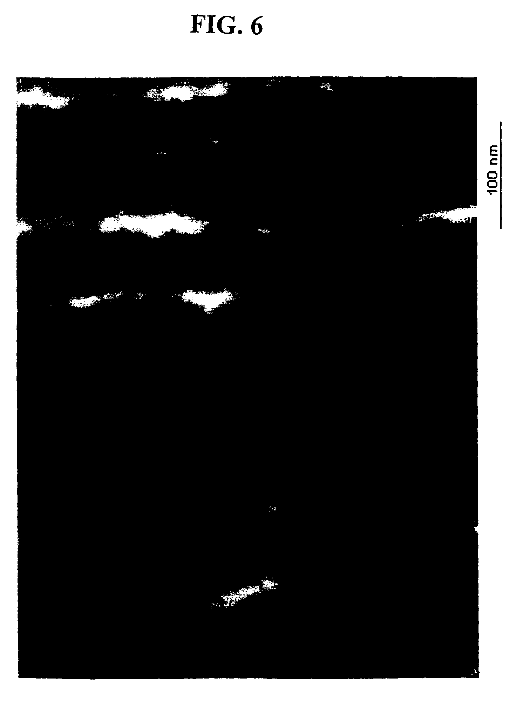

Die Herstellung des Ausführungsbeispiels 6 erfolgte unter identischen Parametern zum Ausführungsbeispiel 1 mit dem einzigen Unterschied, daß die Schichtdicke auf 2000 nm eingestellt wurde. Das Emissionsverhalten dieser Schicht ist ähnlich wie Ausführungsbeispiel 5. Die mittels Röntgenreflektometrie ermittelte Dichte dieser Schicht beträgt 50 % der Dichte von kristallinem Molybdän. In Auswertung der Röntgendiffraktometrie ergibt sich eine mittelere Kristallitgröße (parallel zur Schichtnormalen) für die Schicht von 6 nm. Hochauflösende Transmissions-Elektronenmikroskopie an dieser Schicht zeigt (Fig. 6), daß die Schicht elongierte Hohlräume mit typischen Ausdehnungen parallel zur Schichtebene von etwa 10 bis 20 nm besitzt. Die Längsausdehnung dieser Hohlräume (parallel zur Schichtnormalen) beträgt zwischen mehreren 100 nm und maximal der Schichtdicke.

Für die Ausführungsbeispiele 1 bis 6 wurde die Elektronen-Feldemission dadurch nachgewiesen, daß im Fowler-Nordheim-Plot ein nahezu linearer Anstieg im Bereich kleiner inverser Anodenspannungen erfolgt.

Für die verschiedenen erfindungsgemäßen Schichten reduzierter Dichte wurde die Langzeitstabilität beim maximalen Strom, der in Fig. 2 und Fig. 4 für die jeweiligen Strukturen erreicht wurde, getestet. Über den gesamten Zeitraum von mehreren Wochen konnte innerhalb von statistischen Schwankungen auch bei der sehr hohen Stromdichte keine Abnahme des Emissionsstromes gemessen werden.

### Zusammenfassende Darstellung der erfindungsgemäßen Vorteile

Mit den Ausführungsbeispielen 1 bis 6 wurde gezeigt, daß die erfindungsgemäßen Schichten reduzierter Dichte bereits bei einer sehr geringen Schichtdicke von 20 bis 30 Nanometern eine hervorragende Elektronen-Feldemission aufweisen. In dieser Eigenschaft sind sie Feldemissionsquellen entsprechend dem Stand der Technik mindestens gleichwertig. Durch den Einsatz von mehrschichtigen Strukturen können die Kennlinien der Feldemission zusätzlich modifiziert werden.

Die verschiedenen erfindungsgemäßen Schichten reduzierter Dichte besitzen eine hohe Langzeitstabilität hinsichtlich ihrer Funktion als Elektronen-Feldemissionsquelle.

Die Herstellung von Elektronen-Feldemissionsquelle auf Basis der erfindungsgemäßen Schichten reduzierter Dichte kann durch einen sehr einfachen technologischen Prozeß realisiert werden. Durch den Einsatz der Sputter-Technologie können Elektronen-Feldemissionsquellen in guter Homogenität auf großen Flächen in der Dimension von Metern abgeschieden werden. Die Kosten für die Beschichtung sind bei diesem Verfahren im Vergleich mit anderen Technologien äußerst gering. Die thermische Belastung des Substrates ist bei der Beschichtung so klein, daß die minimalen Temperaturen bei der Beschichtung bis nahe Raumtemperatur abgesenkt werden können. Damit können problemlos Substrate aus verschiedenen Metallen und Gläsern zur Herstellung der Feldemissionsquellen benutzt werden. Sogar die Verwendung von Plastiksubstraten oder von speziellen Folien wird möglich.

Die erfindungsgemäßen großflächigen Elektronen-Feldemissionsquellen eignen sich somit besonders für den Einsatz in Feldemitter-Displays sogar mit flexiblen Bildschirmen.

## Patentansprüche

1. Flächige Elektronen-Feldemissionsquelle, die Nanoporen und Nanosäulen enthält, insbesondere für den Einsatz in flachen Bildschirmen, die eine aktive Schicht aufweist, deren Basismaterial ein hochschmelzendes Metall mit einem Schmelzpunkt oberhalb 1800 K ist und deren Dichte im Vergleich zum kristallinen Volumenmaterial des hochschmelzenden Metalls um mindestens 20 % reduziert ist.

2. Flächige Elektronen-Feldemissionsquelle, die Nanoporen und Nanosäulen enthält, insbesondere für den Einsatz in flachen Bildschirmen, die eine aktive Schicht aufweist, deren Basismaterial ein Gemisch verschiedener Metalle ist, von denen mindestens eines ein hochschmelzendes Metall mit einem Schmelzpunkt oberhalb 1800 K ist, und die Dichte der aktiven Schicht im Vergleich zum kompakten Gemisch der kristallinen Volumenmaterialien gleicher Zusammensetzung wie das Basismaterial um mindestens 20 % reduziert ist.

3. Flächige Elektronen-Feldemissionsquelle nach Anspruch 1 oder 2, bei der die Dichte der aktiven Schicht um etwa 30 bis 60 % und bevorzugterweise etwa 50 % im Vergleich zum kristallinen Volumenmaterial des hochschmelzenden Metalls oder zum kompakten Gemisch der kristallinen Volumenmaterialien derselben Zusammensetzung wie das Basismaterial reduziert ist.

4. Flächige Elektronen-Feldemissionsquelle nach Anspruch 1 oder 2, bei der die aktive Schicht eine Dicke von etwa 5 nm bis etwa 5000 nm hat.

5. Flächige Elektronen-Feldemissionsquelle nach einem der Ansprüche 1 bis 4, bei der die Nanoporen typische Abmessungen (in Richtung parallel zur Ebene der Schicht) von etwa 1 nm bis etwa 30 nm besitzen.

6. Flächige Elektronen-Feldemissionsquelle nach einem der Ansprüche 1 bis 5, bei der das Basismaterial eines oder mehrere der Metalle Titan, Vanadium, Chrom, Zirkon, Niobium, Molybdän, Hafnium, Tantal oder Wolfram umfaßt.

7. Flächige Elektronen-Feldemissionsquelle nach einem der Ansprüche 1 bis 6, bei der das Basismaterial ein oder mehrere weitere Metalle enthält.

8. Flächige Elektronen-Feldemissionsquelle nach einem der Ansprüche 1 bis 7, bei der die aktive Schicht eine oder mehrere Legierungen eines oder mehrerer Metalle mit einem oder mehreren Elementen aus der Gruppe Bor, Kohlenstoff, Stickstoff oder Sauerstoff enthält.

9. Flächige Elektronen-Feldemissionsquelle nach Anspruch 8, bei der die Konzentration des einen oder der mehreren Elemente aus der Gruppe Bor, Kohlenstoff, Stickstoff oder Sauerstoff in der Legierung zwischen 0,1 Atom-% und 80 Atom-% beträgt.

10. Flächige Elektronen-Feldemissionsquelle nach Anspruch 1 oder 2, bei der das hochschmelzende Metall in der aktiven Schicht röntgenographisch amorph ist.

11. Flächige Elektronen-Feldemissionsquelle nach Anspruch 1 oder 2, bei der das hochschmelzende Metall in der aktiven Schicht nanokristallin mit typischen Kristallitgrößen kleiner 10 nm ist.

12. Flächige Elektronen-Feldemissionsquelle nach Anspruch 1 oder 2, bei der das hochschmelzende Metall in der aktiven Schicht nanokristallin mit typischen Kristallitgrößen kleiner 20 nm ist.

13. Flächige Elektronen-Feldemissionsquelle nach Anspruch 1 oder 2, bei der das hochschmelzende Metall in der aktiven Schicht nanokristallin mit typischen Kristallitgrößen kleiner 40 nm ist.

14. Flächige Elektronen-Feldemissionsquelle nach einem der Ansprüche 1 bis 13, bei der unter der aktiven Schicht eine metallische oder halbleitende Basisschicht angeordnet ist.

15. Flächige Elektronen-Feldemissionsquelle nach Anspruch 14, bei der die Basisschicht eine höhere Leitfähigkeit als die aktive Schicht aufweist.

16. Flächige Elektronen-Feldemissionsquelle nach einem der Ansprüche 1 bis 15, bei der die Basisschicht eine Dicke von etwa 10 nm bis etwa 10 µm aufweist.

17. Flächige Elektronen-Feldemissionsquelle nach einem der Ansprüche 1 bis 16, bei der die Basisschicht eines oder ein Gemisch mehrerer der in Anspruch 8 genannten hochschmelzenden Metalle und/oder ein anderes Metall und/oder einen Halbleiter oder ein Halbleitergemisch umfaßt.

18. Flächige Elektronen-Feldemissionsquelle nach einem der Ansprüche 1 bis 17, bei der unter der aktiven Schicht oder der Basisschicht ein Substrat angeordnet ist, welches ein Metall, Halbleiter oder Isolator ist.

19. Flächige Elektronen-Feldemissionsquelle nach einem der Ansprüche 1 bis 18, bei der auf der aktiven Schicht eine Deckschicht oder mehrere Deckschichten ist oder sind, die jeweils aus (a) einem Metall oder Metallgemisch nach Anspruch 6 und/oder einem anderen Metall oder Metallgemisch oder aus (b) einem isolierenden Material der Gruppen Nitride, Oxide, Carbide, Boride oder aus (c) einem halbleitenden Material wie Silicium oder Kohlenstoff besteht.

20. Flächige Elektronen-Feldemissionsquelle nach Anspruch 19, bei der die eine Deckschicht oder mehrere Deckschichten jeweils eine Dicke von etwa 1 nm bis etwa 20 nm aufweisen.

21. Verfahren zur Herstellung einer flächigen Elektronen-Feldemissionsquelle, nach einem der Ansprüche 1 bis 20, bei dem eine aktive Schicht reduzierter Dichte mit einem oder mehreren verschiedenen Verfahren der physikalischen Dampfabscheidung (PVD) abgeschieden wird, wobei die Prozeßführung des Verfahrens derart zu gestalten ist, daß durch einen hinreichend geringen Eintrag von kinetischer Energie und Wärme das Wachstum einer Schicht reduzierter Dichte und die Ausbildung von Nanoporen und Nanosäulen ermöglicht wird.

22. Verfahren nach Anspruch 21, bei dem eine aktive Schicht aus mindestens einem Metall und/oder Halbleiter abgeschieden wird.

23. Verfahren nach Anspruch 21 oder 22, bei dem die aktive Schicht bei einer Temperatur zwischen 300 und 600 K und bevorzugterweise bei einer Temperatur zwischen 300 und 400 K hergestellt wird.

24. Verfahren nach einem der Ansprüche 21 bis 23, bei dem die aktive Schicht bei einer kleinen Aufwachsrate zwischen etwa 0,01 nm/s und etwa 1 nm/s hergestellt wird.

25. Verfahren nach einem der Ansprüche 21 bis 24, bei dem die aktive Schicht mittels Kathodenzerstäubung (Magnetronsputtern) bei einem erhöhten Druck-Abstands-Produkt von mindestens etwa 20 Pa cm hergestellt wird.

26. Verfahren nach einem der Ansprüche 21 bis 25, bei dem die aktive Schicht und/oder die Basisschicht und/oder die Deckschicht innerhalb eines Vakuumzyklus oder durch ein- oder mehrmalige Unterbrechung des Vakuums und nachfolgenden Kontakt der jeweils oberen Schichten mit atmosphärischer Luft hergestellt wird und daß die aktive Schicht und/oder die Basisschicht und/oder die Deckschicht mit demselben oder verschiedenen Verfahren der physikalischen Dampfabscheidung hergestellt werden.

27. Verfahren nach einem der Ansprüche 21 bis 26, bei dem zur nachträglichen Beeinflussung der Feldemissionseigenschaften ein zusätzlicher strukturgebender Prozeß zur weiteren Ausprägung der Struktur und/oder Porösität der aktiven Schicht wie chemisches Ätzen durch Säuren und/oder Plasmaätzen in reaktiven Gasen erfolgt.
